# EUROPEAN PATENT APPLICATION

(11) **EP 4 700 090 A1**
(43) Date of publication of application: **25.02.2026**
(21) Application number: 24792365.9
(22) Date of filing: 28.02.2024
(51) Int. Cl.: C08L 83/05, C08K 5/526, C08K 5/5425, C08L 83/07

(54) **PLATINUM-PHOSPHITE COMPLEX-CONTAINING HYDROSILYLATION CATALYST, METHOD FOR PRODUCING SAID PLATINUM-PHOSPHITE COMPLEX-CONTAINING HYDROSILYLATION CATALYST, AND CURABLE ORGANOPOLYSILOXANE COMPOSITION CONTAINING SAID CATALYST**

(30) Priority: 21.04.2023 JP 2023069709
(71) Applicant: SHIN-ETSU CHEMICAL CO., LTD., Tokyo 1000005 (JP)
(72) Inventor: ARAKI, Tadashi, Annaka-shi, Gunma 379-0224 (JP)
(74) Representative: Schicker, Silvia
(86) International application number: PCT/JP2024/007309
(87) International publication number: WO 2024/219089

(57) **Abstract**

The present invention is: a platinum-phosphite ester complex-containing hydrosilylation catalyst which is a liquid at 23°C, is an association between a platinum-phosphite ester complex and a silane compound and/or a partial hydrolyzate thereof, and contains no hydrocarbon organic solvent; and a method for manufacturing the platinum-phosphite ester complex-containing hydrosilylation catalyst. This provides a platinum-phosphite ester complex-containing hydrosilylation catalyst that contains no organic solvent and is a liquid at 23°C.

## Description

### TECHNICAL FIELD

The present invention relates to a platinum-phosphite ester complex-containing hydrosilylation catalyst, a curable organopolysiloxane composition using the catalyst, and a method for manufacturing the platinum-phosphite ester complex-containing hydrosilylation catalyst.

### BACKGROUND ART

An addition reaction curing organopolysiloxane composition contains an organohydrogenpolysiloxane having a hydrogen atom bonded to silicon atom (i.e., hydrosilyl groups), an organopolysiloxane having an alkenyl group such as a vinyl group bonded to a silicon atom, and a platinum catalyst.

In the case of so-called one-component organopolysiloxane compositions in which these three components are combined into one composition, problems such as changes in properties such as thickening and gelation and changes in the physical properties of the organopolysiloxane cured product obtained after curing occur if they are exposed to high-temperature conditions. To avoid these problems, a method is used in which the components are divided into two or more components and mixed just before use to make a mixed organopolysiloxane composition, or the one-component organopolysiloxane composition is transported refrigerated or frozen.

In the former case, there is a concern that the physical properties of the organopolysiloxane cured product obtained may change due to blending or mixing, so highly advanced blending and mixing techniques are required. In the latter case, refrigeration or freezing is required from storage until use, which increases transportation and storage costs significantly and is commercially disadvantageous. Against this background, there has been an increasing demand in recent years for one-component organopolysiloxane compositions whose properties and performance do not change even when stored for long periods at room temperature (here meaning 25°C).

Patent Documents 1 and 2 propose a method for improving storage stability by using a certain specific phosphite ester compound. Although these methods dramatically improve storage stability, they have problems such as the fact that a sufficiently cured organopolysiloxane cured product cannot be obtained unless it is exposed to high temperatures of around 150°C, that phosphite ester compounds are easily hydrolyzed and have poor storage stability in air, and that the catalyst recrystallizes when the coordination number of the phosphite ester compound is high. Therefore, there has been a demand for a platinum-phosphite ester complex-containing hydrosilylation catalyst that is a liquid at 23°C without containing organic solvents, and if such a catalyst can be obtained, a curable organopolysiloxane composition that contains no organic solvent and has stable physical and other properties can be obtained, so there has been an increasing demand for a platinum-phosphite ester complex-containing hydrosilylation catalyst that is liquid at 23°C without containing organic solvents.

### CITATION LIST

### PATENT LITERATURE

Patent Document 1: WO2021014970A1
Patent Document 2: JP2021042323A

### SUMMARY OF INVENTION

### TECHNICAL PROBLEM

The present invention has been made to solve these problems, and aims to improve the stability of the properties of the catalyst itself by obtaining a platinum-phosphite ester complex-containing hydrosilylation catalyst that is liquid at 23°C even without containing an organic solvent, and to obtain a curable silicone composition that contains no organic solvent by using this catalyst in a curable organopolysiloxane composition. Furthermore, the present invention aims to provide an organopolysiloxane composition that has stable physical and other properties even when exposed to temperatures above room temperature for long periods of time.

### SOLUTION TO PROBLEM

The present invention is the result of extensive research to achieve the above object, and provides a platinum-phosphite ester complex-containing hydrosilylation catalyst formed by association of a platinum-phosphite ester complex with a silane compound and/or a partial hydrolyzate thereof.

That is, the present invention provides a platinum-phosphite ester complex-containing hydrosilylation catalyst that is an association of the following component (A) and the following component (B), contains no organic solvent, and is liquid at 23°C:
(A) a platinum-phosphite ester complex consisting of platinum and a phosphite ester compound represented by the following general formula (1), 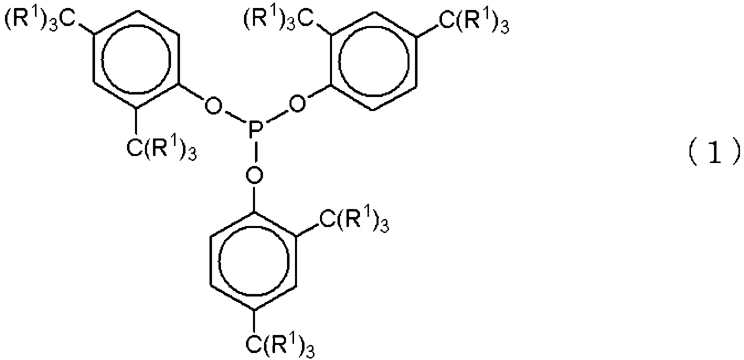 wherein R¹ is a hydrogen atom or a monovalent aliphatic hydrocarbon group having 1 to 3 carbon atoms; and
(B) a silane compound represented by the following general formula (2) and/or a partial hydrolyzate thereof, 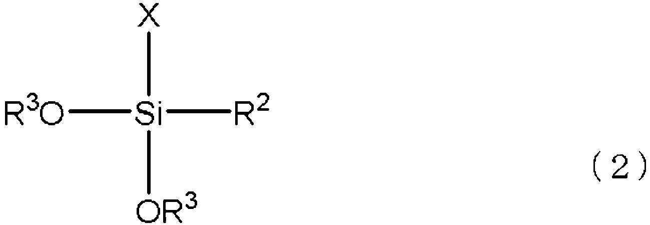
wherein R² represents an alkenyl group having 2 to 10 carbon atoms, and R³ represents a monovalent aliphatic hydrocarbon group having 1 to 3 carbon atoms; in addition, X represents a monovalent aliphatic hydrocarbon group having 1 to 3 carbon atoms or OR³.

The component (B) is preferably an alkoxysilane derivative in which R² is a vinyl group.

The platinum-phosphite ester complex-containing hydrosilylation catalyst obtained by associating a complex of a phosphite ester compound and platinum represented by the formula (1) with a silane compound and/or a partial hydrolyzate thereof represented by the formula (2) can be kept in a liquid state at room temperature, which has the advantage of making it easy to work with when the catalyst is blended into a curable organopolysiloxane composition, and of facilitating uniform dispersion.

The present invention can provide a curable organopolysiloxane composition that contains no organic solvent and contains the platinum-phosphite ester complex-containing hydrosilylation catalyst.

Such a curable organopolysiloxane composition has stable physical and other properties even when exposed to temperatures above room temperature for long periods of time, and an article having the cured product of the composition can be provided.

The present invention also provides a method for manufacturing compositions of the above platinum-phosphite ester complex-containing hydrosilylation catalyst.

That is, the present invention provides a method for manufacturing a platinum-phosphite ester complex-containing hydrosilylation catalyst, comprising the following steps (a) to (d):
(a) a step of preparing a solution wherein a phosphite ester compound represented by the following general formula (1) is dissolved in a hydrocarbon solvent having a boiling point of 80°C or less, 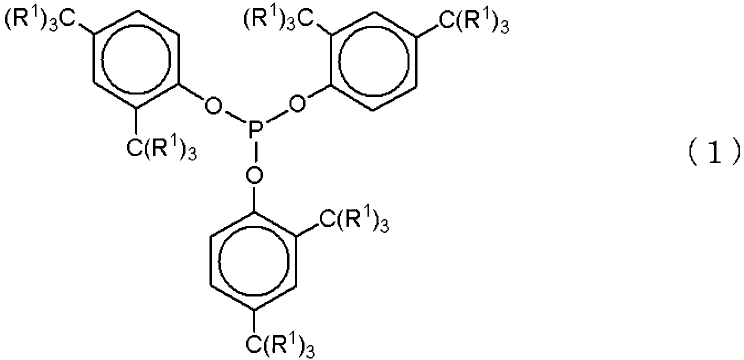 wherein R¹ is a hydrogen atom or a monovalent aliphatic hydrocarbon group having 1 to 3 carbon atoms;
(b) a step of adding to the solution a platinum compound, containing no organic solvent, selected from the group consisting of complexes between a platinum chloride, a chloroplatinic acid or a chloroplatinic acid salt and vinyl group-containing siloxane, and then dispersing it to prepare a solution containing a platinum-phosphite ester complex;
(c) a step of adding to the solution obtained in the above steps (a) to (b) a silane compound represented by the following general formula (2) and/or a partial hydrolyzate thereof, and then dispersing it to prepare a solution containing an association of at least a part of the platinum-phosphite ester complex and the silane compound represented by the following general formula (2) and/or a partial hydrolyzate thereof, 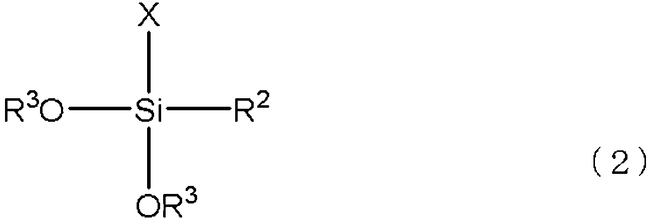 wherein R² represents an alkenyl group having 2 to 10 carbon atoms, and R³ represents a monovalent aliphatic hydrocarbon group having 1 to 3 carbon atoms; in addition, X represents a monovalent aliphatic hydrocarbon group having 1 to 3 carbon atoms or OR³; and
(d) a step of removing the hydrocarbon solvent from the solution obtained in the step (c).

By carrying out the above steps (a) to (d), a platinum-phosphite ester complex-containing hydrosilylation catalyst can be stably manufactured.

In the step (c), the number of moles of alkenyl groups in the silane compound represented by the general formula (2) and/or the partial hydrolyzate thereof added is preferably within the range of 0.01 to 500 times that of one platinum atom in the platinum compound. If the ratio is 0.01 times or more, the catalyst will be able to maintain its liquid properties at 23°C, and there will be no problems such as deteriorated dispersibility or reduced blending workability in the curable organopolysiloxane composition containing the catalyst due to crystal precipitation. Furthermore, if the ratio is 500 times or less, the amount of the silane compound represented by general formula (2) and/or the partial hydrolyzate thereof added will not be too large, the molecular weight of the siloxane compound itself will be appropriate, there will be no problem with the effect on the viscosity of the resulting platinum-phosphite ester complex-containing hydrosilylation catalyst, the properties of the resulting platinum-phosphite ester complex-containing hydrosilylation catalyst will be stable, and the workability when blending the catalyst will also be good.

### ADVANTAGEOUS EFFECTS OF INVENTION

The platinum-phosphite ester complex-containing hydrosilylation catalyst of the present invention is a liquid at 23°C even without containing any organic solvent, and therefore the catalyst itself has extremely outstanding stability of properties. Furthermore, when the catalyst is blended into the curable silicone composition, it can be easily dispersed uniformly, making it possible to obtain a curable organopolysiloxane composition that contains no organic solvent. The obtained organic solvent-free curable organopolysiloxane composition provides an organopolysiloxane composition that has stable physical and other properties even when exposed to temperatures above room temperature for long periods of time. Furthermore, since it contains no organic solvent, etc., it is possible to obtain a very safe organopolysiloxane cured product.

### DESCRIPTION OF EMBODIMENTS

The present inventors searched for a catalyst that is useful as a resin curing catalyst, and in particular as a curing catalyst for organopolysiloxane compositions, and found that an association between platinum and a platinum-phosphite ester complex represented by the following general formula (1) and a silane compound represented by the following general formula (2) and/or a partial hydrolyzate thereof is useful. They therefore completed the present invention, including a method for manufacturing the same.

That is, the present invention is:
a platinum-phosphite ester complex-containing hydrosilylation catalyst comprising:
   (A) a platinum-phosphite ester complex consisting of platinum and a phosphite ester compound represented by the following general formula (1), 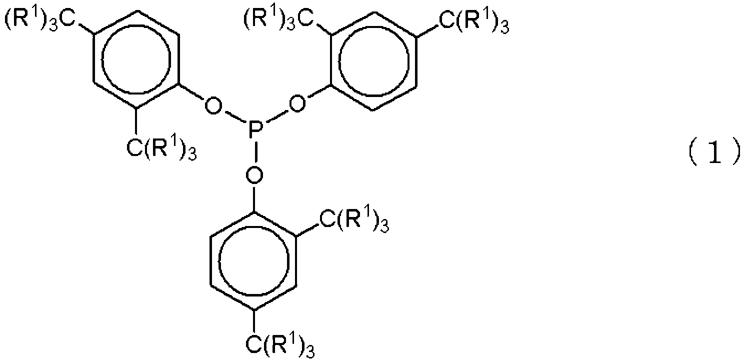 wherein R¹ is a hydrogen atom or a monovalent aliphatic hydrocarbon group having 1 to 3 carbon atoms; and
   (B) a silane compound represented by the following general formula (2) and/or a partial hydrolyzate thereof, 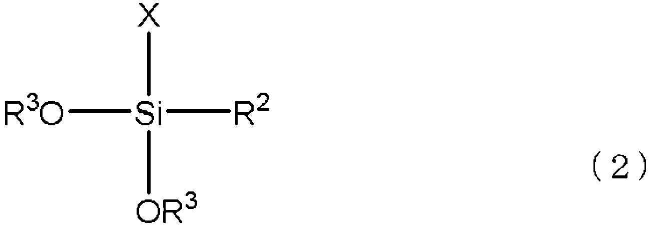 wherein R² represents an alkenyl group having 2 to 10 carbon atoms, and R³ represents a monovalent aliphatic hydrocarbon group having 1 to 3 carbon atoms; in addition, X represents a monovalent aliphatic hydrocarbon group having 1 to 3 carbon atoms or OR³; and
the hydrosilylation catalyst is an association of the components (A) and (B), contains no organic solvent, and is a liquid at 23°C.

The present invention also provides:
a method for manufacturing a platinum-phosphite ester complex-containing hydrosilylation catalyst, comprising the following steps (a) to (d):
(a) a step of preparing a solution wherein a phosphite ester compound represented by the following general formula (1) is dissolved in a hydrocarbon solvent having a boiling point of 80°C or less, 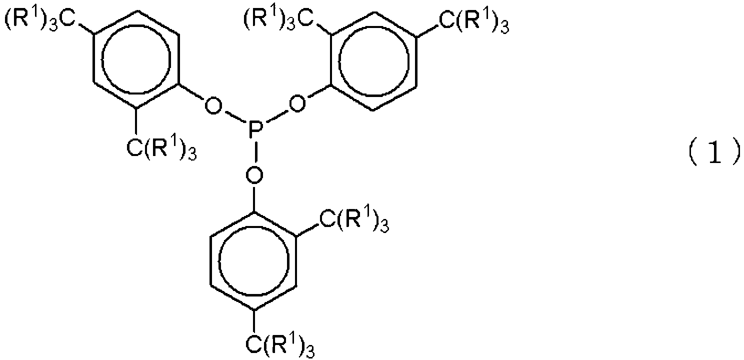 wherein R¹ is a hydrogen atom or a monovalent aliphatic hydrocarbon group having 1 to 3 carbon atoms;
(b) a step of adding to the solution a platinum compound, containing no organic solvent, selected from the group consisting of complexes between a platinum chloride, a chloroplatinic acid or a chloroplatinic acid salt and vinyl group-containing siloxane, and then dispersing it to prepare a solution containing a platinum-phosphite ester complex;
(c) a step of adding to the solution obtained in the above steps (a) to (b) a silane compound represented by the following general formula (2) and/or a partial hydrolyzate thereof, and then dispersing it to prepare a solution containing an association of at least a part of the platinum-phosphite ester complex and the silane compound represented by the following general formula (2) and/or a partial hydrolyzate thereof, 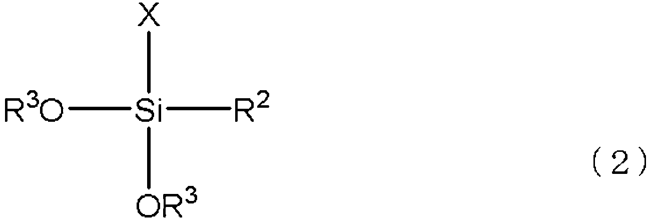 wherein R² represents an alkenyl group having 2 to 10 carbon atoms, and R³ represents a monovalent aliphatic hydrocarbon group having 1 to 3 carbon atoms; in addition, X represents a monovalent aliphatic hydrocarbon group having 1 to 3 carbon atoms or OR³; and
(d) a step of removing the hydrocarbon solvent from the solution obtained in the step (c).

### [Phosphite Ester Compound]

The phosphite ester compound used in the present invention and represented by the following general formula (1) is an essential component that, by forming a complex with platinum, dramatically improves the storage stability of the physical and other properties of a curable organopolysiloxane composition that contains a platinum-phosphite ester complex-containing hydrosilylation catalyst obtained using this compound, 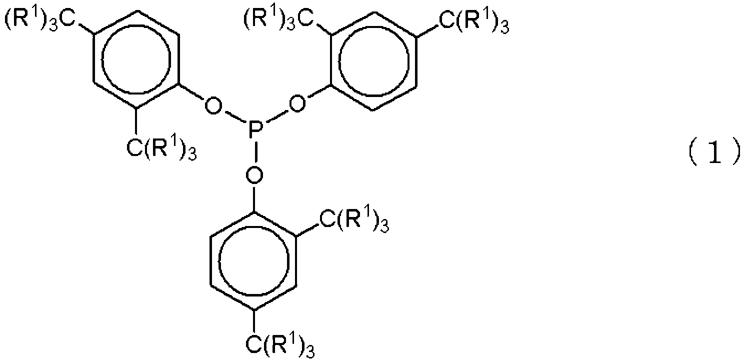 wherein R¹ is a hydrogen atom or a monovalent aliphatic hydrocarbon group having 1 to 3 carbon atoms.

In the above general formula (1), R¹ is independently a hydrogen atom or a monovalent aliphatic hydrocarbon group having 1 to 3 carbon atoms, preferably having 1 to 2 carbon atoms, and more preferably having 1 carbon atom, i.e., a methyl group. Specific examples of the phosphite ester compound include phosphite ester compounds in which R¹ has the same number of carbon atoms, such as tris(2,4-dimethylphenyl)phosphite, tris(2,4-di-tert-butylphenyl)phosphite, tris(2,4-bis(3-ethylpentan-3-yl)phenyl)phosphite, and tris(2,4-bis(4-propylheptan-4-yl)phenyl) phosphite, and phosphite ester compounds in which R¹ has a different number of carbon atoms, such as tris(4-(tert-butyl)-2-methylphenyl)phosphite, tris(4-(tert-butyl)-2-ethylphenyl)phosphite, tris(2-(tert-butyl)-4-(3-ethylpentan-3-yl)phenyl)phosphite, and tris(2- (tert-butyl)-4-(3-methylhexan-3-yl)phenyl)phosphite. Among these, it is particularly preferable to use tris(2,4-di-tert-butylphenyl)phosphite ester, which is easily available and has a high storage stability effect.

The amount of the phosphite ester compound used in the present invention is optimally in the range of more than 0.6 molecules and not more than 3.0 molecules per platinum molecule, and more preferably, it is particularly good to add an amount in the range of 0.8 molecules or more and 2.5 molecules or less per platinum molecule. Here, if the amount is more than 0.6 molecules per platinum molecule, the storage stability of the curable organopolysiloxane composition containing the catalyst will be good, and there will be no risk of the organopolysiloxane composition gelling. On the other hand, if the amount is 3.0 molecules or less per platinum molecule, then even if the catalyst is associated with a silane compound and/or a partial hydrolyzate thereof described later, there is no risk of crystallization at room temperature, and the platinum-phosphite ester complex-containing hydrosilylation catalyst can be sufficiently maintained in a liquid state. Furthermore, the catalyst has good dispersibility in the curable organopolysiloxane composition containing the catalyst, and there are no problems such as reduced blending workability.

### [Silane Compound and/or Partial Hydrolyzate Thereof]

The silane compound represented by the general formula (2) and/or a partial hydrolyzate thereof used in the present invention are essential components for preventing crystallization at room temperature by associating with the above-mentioned complex of platinum and a phosphite ester compound, 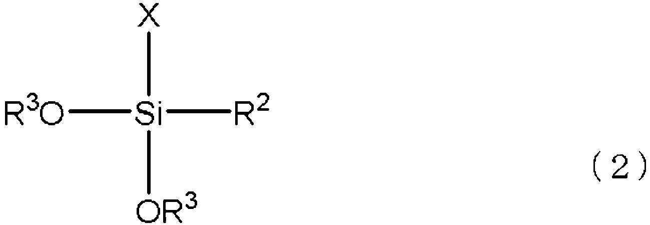 wherein R² represents an alkenyl group having 2 to 10 carbon atoms, and R³ represents a monovalent aliphatic hydrocarbon group having 1 to 3 carbon atoms; in addition, X represents a monovalent aliphatic hydrocarbon group having 1 to 3 carbon atoms or OR³.

In the above general formula (2), R² is an alkenyl group having 2 to 10 carbon atoms, preferably having 2 to 10 carbon atoms, more preferably having 2 to 8 carbon atoms, and among these, particularly preferably a vinyl group. Furthermore, in the above formula (2), R³ is a monovalent aliphatic hydrocarbon group having 1 to 3 carbon atoms. Specific examples include a methyl group, an ethyl group, a propyl group, an isopropyl group, a 3-propenyl group, an isopropenyl group, etc. It is preferably a group having 1 or 2 carbon atoms, and more preferably having 1 carbon atom, i.e., a methyl group. Specific examples of the siloxane compound include vinyl group-containing alkoxysilanes such as vinyltrimethoxysilane, vinyldimethoxymethylsilane, vinyltriethoxysilane, vinyldiethoxymethylsilane, allyltrimethoxysilane, allyldimethoxymethylsilane, 7-octenyltrimethoxysilane, and 7-octenyldimethoxymethylsilane, and/or partial hydrolyzates thereof.

In the above general formula (2), X is a monovalent aliphatic hydrocarbon group having 1 to 3 carbon atoms or OR³. Specific examples include a methyl group, an ethyl group, a propyl group, a methoxy group, an ethoxy group, a propoxy group, and an isopropoxy group.

The amount of the silane compound and/or the partial hydrolyzate thereof used in the present invention to be added is optimally within the range of 0.05 mol% or more and 100 mol% or less per platinum molecule described above, and more preferably within the range of 0.05 mol% or more and 90 mol% or less per platinum molecule.

Here, if the amount is 0.05 mol% or more per platinum molecule, the resulting platinum-phosphite ester complex-containing hydrosilylation catalyst does not crystallize at room temperature, can maintain the liquid state of the platinum-phosphite ester complex-containing hydrosilylation catalyst, and exhibits good dispersibility in the curable organopolysiloxane composition containing the catalyst, preventing problems such as reduced blending workability. Furthermore, if the amount is 100 mol% or less per platinum molecule, the platinum-phosphite ester complex-containing hydrosilylation catalyst itself is stable and the effective platinum amount of the platinum-phosphite ester complex-containing hydrosilylation catalyst itself does not decrease, so that when a curable organopolysiloxane composition containing the catalyst is obtained, the amount contained is appropriate, and the amount of the silane compound and/or the partial hydrolyzate thereof added is also appropriate, resulting in good mechanical characteristics and curability.

One of the features of the platinum-phosphite ester complex-containing hydrosilylation catalyst of the present invention is that it contains no hydrocarbon organic solvent. Here, "hydrocarbon organic solvent" means an aliphatic hydrocarbon solvent or an aromatic hydrocarbon solvent. Aliphatic hydrocarbon solvents include not only hydrocarbon solvents with a boiling point of 80°C or less used in step (a) of the catalyst manufacturing method described below, but also aliphatic hydrocarbon solvents with a boiling point of more than 80°C. Specific examples include n-pentane, n-hexane, 2-methylbutane, 2,2-dimethylbutane, 2,3-dimethylbutane, 2-methylpentane, 3-methylpentane, n-heptane, and n-octane. Aromatic hydrocarbons include benzene, toluene, xylene, ethylbenzene, and isopropylbenzene.

### [Use of Platinum-Phosphite Ester Complex-Containing Hydrosilylation Catalyst]

The platinum-phosphite ester complex-containing hydrosilylation catalyst described above can be used as a curing catalyst for a variety of resins, a purification catalyst, etc., but its characteristics can be particularly leveraged if it is used as a curing catalyst for organopolysiloxane compositions that become resins (or gels) through a hydrosilylation reaction. This is because when heated, it has roughly the same curability as conventional platinum compound-based hydrosilylation catalysts, and when stored at room temperature, the phosphite ester compound forms a complex with platinum, suppressing catalytic activity and causing the hydrosilylation reaction to proceed very slowly. As a result, the physical and other properties of curable organopolysiloxane compositions that use this catalyst remain stable even when exposed to temperatures above room temperature for long periods of time. Furthermore, by associating a complex of a phosphite ester compound and platinum with the silane compound represented by the general formula (2) and/or a partial hydrolyzate thereof, the resulting platinum-phosphite ester complex-containing hydrosilylation catalyst can be maintained in a liquid state at room temperature. This has the advantage that when this catalyst is blended into a curable organopolysiloxane composition, workability is improved and uniform dispersion is facilitated.

The amount of the platinum-phosphite ester complex-containing hydrosilylation catalyst added to the curable organopolysiloxane composition is 0.001 to 10.0 parts by mass, preferably 0.010 to 5.0 parts by mass, and more preferably 0.050 to 3.0 parts by mass, per 100 parts by mass of the alkenyl group-containing polymer. If the amount of the platinum-phosphite ester complex-containing hydrosilylation catalyst is 0.001 parts by mass or more, the strength of the resulting silicone rubber composition will be sufficient and there will be no curing failure. Conversely, if the amount of platinum-phosphite ester complex-containing hydrosilylation catalyst is 10.0 parts by mass or less, the resulting silicone rubber composition will not become discolored or take a shorter time to cure, and it will also be cost-effective. The activity of the catalyst, i.e., the curability, can be adjusted by increasing or decreasing the concentration of the platinum-phosphite ester complex-containing hydrosilylation catalyst added.

### [Method for Manufacturing Platinum-Phosphite Ester Complex-Containing Hydrosilylation Catalyst]

### [Step (a)]

Step (a) is a step of preparing a solution wherein a phosphite ester compound represented by the following general formula (1) is dissolved in a hydrocarbon solvent having a boiling point of 80°C or less,
Step (a) is a step of preparing a solution of the phosphite ester compound represented by the general formula (1) in a hydrocarbon solvent having a boiling point of 80°C or less, 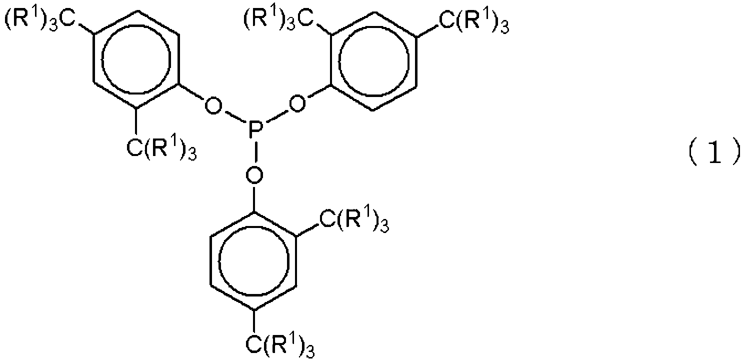
wherein R¹ is a hydrogen atom or a monovalent aliphatic hydrocarbon group having 1 to 3 carbon atoms.

If the phosphite ester compound is a liquid at room temperature, a complex can be easily formed in the following step (b) by blending it with a platinum compound, containing no organic solvent, selected from the group consisting of complexes between a platinum chloride, a chloroplatinic acid or a chloroplatinic acid salt and vinyl group-containing siloxane. However, since most of the phosphite ester compounds are solid at room temperature, it is possible to rapidly form a complex by dissolving the phosphite ester compound in a hydrocarbon solvent in the above step (a) and then by blending it with a platinum compound, containing no organic solvent, selected from the group consisting of complexes between a platinum chloride, a chloroplatinic acid or a chloroplatinic acid salt and vinyl group-containing siloxane.

Hydrocarbon solvents with a boiling point of 80°C or less may be linear or branched. Specific examples of hydrocarbon solvents with a boiling point of 80°C or less include n-pentane (boiling point: 36°C), n-hexane (boiling point: 68°C), 2-methylbutane (boiling point: 30°C), 2,2-dimethylbutane (boiling point: 50°C), 2,3-dimethylbutane (boiling point: 58°C), 2-methylpentane (boiling point: 62°C), and 3-methylpentane (boiling point: 63°C). Among these, n-hexane (boiling point: 68°C) is particularly suitable as it is relatively easy to handle for industrial use and is easy to remove in the subsequent removal step. From the viewpoint of distilling off the hydrocarbon solvent under reduced pressure, it is preferable that the boiling point of the hydrocarbon solvent used is 80°C or less. The lower limit is not particularly limited, but is generally above 0°C.

In this case, it is possible to obtain a stable platinum-phosphite ester complex-containing hydrosilylation catalyst by setting the vacuum distillation temperature to 40°C or less. In the case of hydrocarbon solvents with a boiling point of 80°C or more, the hydrocarbon solvent used cannot be completely removed unless the vacuum distillation temperature is 40°C or more. This may result in the hydrocarbon solvent remaining in the platinum-phosphite ester complex-containing hydrosilylation catalyst or the platinum-phosphite ester complex-containing hydrosilylation catalyst being decomposed by the temperature in the solvent removal step, resulting in the precipitation of crystals.

Furthermore, there is no particular restriction on the amount of the hydrocarbon solvent with a boiling point of 80°C or less used. Furthermore, the temperature at which the phosphite ester compound represented by the general formula (1) is dissolved in the hydrocarbon solvent is 40°C or less, and more preferably within the range of 0 to 35°C. If it dissolves at 40°C or less, the phosphite ester compound represented by the general formula (1) is less likely to hydrolyze with the water contained in the hydrocarbon solvent, so that the phosphite ester compound represented by (1) will not change into a phosphate ester compound, resulting in good stability of the resulting platinum-phosphite ester complex-containing hydrosilylation catalyst. Furthermore, there is no particular restriction on the time required for dissolution. It is preferable to select a vessel for dissolution that can block oxygen.

### [Step (b)]

Step (b) is a step of adding to the solution a platinum compound, containing no organic solvent, selected from the group consisting of complexes between a platinum chloride, a chloroplatinic acid or a chloroplatinic acid salt and vinyl group-containing siloxane, and then dispersing it to prepare a solution containing a platinum-phosphite ester complex.

### [The Platinum Compound, Containing no Organic Solvent, Selected from the Group consisting of Complexes between a Platinum Chloride, a Chloroplatinic Acid or a Chloroplatinic Acid Salt and Vinyl group-containing Siloxane]

The platinum compound, containing no organic solvent, selected from the group consisting of complexes between a platinum chloride, a chloroplatinic acid or a chloroplatinic acid salt and vinyl group-containing siloxane, used in the present invention is usually a curing catalyst that itself promotes the hydrosilylation addition reaction of an SiH group in an organohydrogenpolysiloxane to an alkenyl group-containing polymer contained in a curable organopolysiloxane composition. In the present invention, forming a complex with a phosphite ester compound represented by the general formula (1), 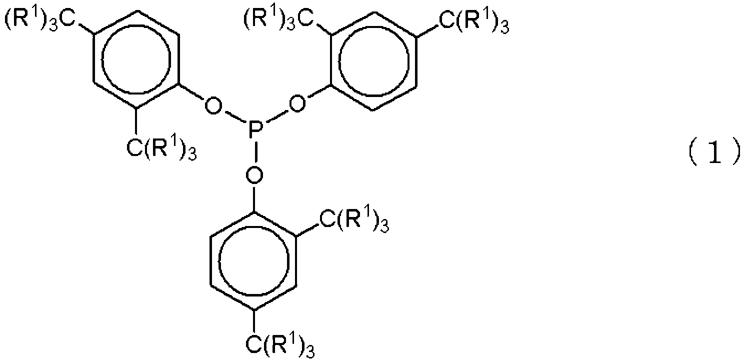 wherein R¹ is a hydrogen atom or a monovalent aliphatic hydrocarbon group having 1 to 3 carbon atoms;
enables significantly improvement of the storage stability of the physical and other properties of the curable organopolysiloxane composition obtained using the complex, and associating with the silane compound represented by the general formula (2) and/or a partial hydrolyzate thereof, 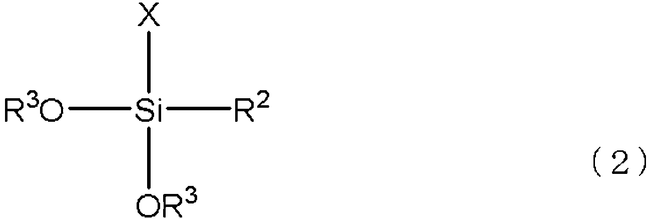 wherein R² represents an alkenyl group having 2 to 10 carbon atoms, and R³ represents a monovalent aliphatic hydrocarbon group having 1 to 3 carbon atoms; in addition, X represents a monovalent aliphatic hydrocarbon group having 1 to 3 carbon atoms or OR³;
achieves a platinum-phosphite ester complex-containing hydrosilylation catalyst that is a liquid at room temperature without containing an organic solvent. Consequently, doing so can improve the uniform dispersibility of the catalyst when a curable organopolysiloxane composition is obtained using this catalyst, and improve the stability and uniformity of the properties of the catalyst itself.

Specific examples of the platinum compound, containing no organic solvent, selected from the group consisting of complexes between a platinum chloride, a chloroplatinic acid or a chloroplatinic acid salt and vinyl group-containing siloxane, include platinum-1,3-divinyl-1,1,3,3-tetramethyldisiloxane complex (Karstedt complex), platinum-1,3-diallyl-1,1,3,3-tetramethyldisiloxane complex, platinum-1,3-divinyl-1,3-dimethyl-1,3-diphenyldisiloxane complex, platinum-1,1,3,3-tetraphenyldisiloxane complex, and platinum-1,3,5,7-tetramethyl-1,3,5,7-tetravinylcyclotetrasiloxane complex. It is essential that the compound contains at least one hydrosilylation catalyst selected from these groups, and it is also essential that the compound contains no organic solvent. Of the above-mentioned hydrosilylation catalysts containing no organic solvent, it is particularly preferable to use platinum-1,3-divinyl-1,1,3,3-tetramethyldisiloxane complex (Karstedt complex).

The platinum compound, containing no organic solvent, selected from the group consisting of complexes between a platinum chloride, a chloroplatinic acid or a chloroplatinic acid salt and vinyl group-containing siloxane, shown here must be free of common organic solvents such as aromatic hydrocarbon organic solvents such as toluene and xylene, and alcohol organic solvents such as ethanol, n-butanol, and 2-ethylhexyl alcohol (excluding low-molecular-weight siloxanes containing vinyl groups, such as tetramethyldivinylsiloxane, trimethyltrivinylcyclotrisiloxane, and tetramethyltetravinylcyclotetrasiloxane).

Embodiments where the platinum compound, containing no organic solvent, selected from the group consisting of complexes between a platinum chloride, a chloroplatinic acid or a chloroplatinic acid salt and vinyl group-containing siloxane, is usually used are those of solutions in a siloxane that forms a ligand of the platinum-siloxane complex. The solution is usually prepared so that the platinum atom content is about 0.001 to 0.010 moles. This is to increase the stability of the platinum-siloxane complex. The mass percentage of platinum contained is 0.2 to 2.0%. Examples of compounds capable of forming platinum-siloxane complexes are tetramethyldivinylsiloxane, trimethyltrivinylcyclotrisiloxane, and tetramethyltetravinylcyclotetrasiloxane, as shown below.

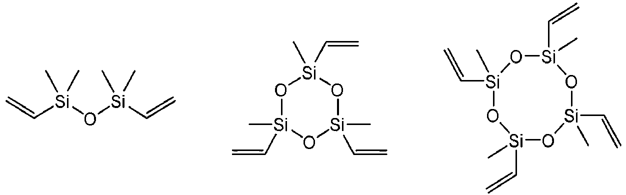

A preferred platinum compound is platinum-1,3-divinyl-1,1,3,3-tetramethyldisiloxane complex (Karstedt complex). It is believed to have the following structure.

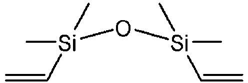

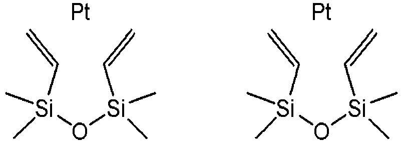

The time required for this step is preferably 30 minutes or more at a temperature of 40°C or less. Note that, in this step (b), as in the step (a), it is preferable to select a vessel capable of blocking oxygen.

### [Step (c)]

Step (c) is a step of adding to the solution obtained in the above steps (a) to (b) a silane compound represented by the following general formula (2) and/or a partial hydrolyzate thereof, and then dispersing it to prepare a solution containing an association of at least a part of the platinum-phosphite ester complex and the silane compound represented by the following general formula (2) and/or a partial hydrolyzate thereof, 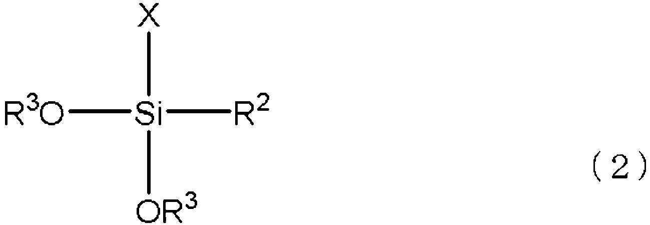 wherein R² represents an alkenyl group having 2 to 10 carbon atoms, and R³ represents a monovalent aliphatic hydrocarbon group having 1 to 3 carbon atoms; in addition, X represents a monovalent aliphatic hydrocarbon group having 1 to 3 carbon atoms or OR³.

This step is preferably carried out at a temperature of 40°C or less for 60 minutes or more. In this step, as in the step (a), it is preferable to select a vessel capable of blocking oxygen. For the silane compound represented by the general formula (2) and/or a partial hydrolyzate thereof used here, it is preferable to add a silane compound in an amount such that the R² units in the general formula (2) are within the range of 0.01 to 500 times the amount of one platinum atom in the platinum compound, containing no organic solvent, selected from the group consisting of complexes between a platinum chloride, a chloroplatinic acid or a chloroplatinic acid salt and vinyl group-containing siloxane. If the units represented by the R² units in the general formula (2) are 0.01 times or more per platinum atom in a platinum compound, the amount added of the silane compound represented by the general formula (2) and/or the partial hydrolyzate thereof to be associated with one platinum atom will be sufficient, the liquid properties will be reliably maintainable at 23°C, and no problems will occur such as deterioration of dispersibility or of blending workability in the curable organopolysiloxane composition containing the catalyst due to precipitation of crystals. Furthermore, if the units represented by the R² units in the general formula (2) are 500 times or less per platinum atom in a platinum compound, the amount added of the silane compound represented by the general formula (2) and/or the partial hydrolyzate thereof will be appropriate. Thus the problems will not occur that, due to increase of the molecular weight of the siloxane compound itself, the effect on the viscosity of the resulting platinum-phosphite ester complex-containing hydrosilylation catalyst will be large, the stability of the properties of the resulting platinum-phosphite ester complex-containing hydrosilylation catalyst will deteriorate and reduced workability when blending the catalyst.

### [Step (d)]

Step (d) is a step of removing the hydrocarbon solvent from the solution obtained in the above steps (a) to (c). This step is an essential step for removing the hydrocarbon solvent from the solution obtained through the steps (a) to (c) and obtaining a platinum-phosphite ester complex-containing hydrosilylation catalyst containing no organic solvent. The method for removing the solvent used here is preferably a vacuum distillation method in which the solvent is distilled off under reduced pressure using a vacuum pump, etc. This is because it is possible to obtain a stable platinum-phosphite ester complex-containing hydrosilylation catalyst by setting the vacuum distillation temperature to 40°C or less. The degree of vacuum varies depending on the boiling point of the hydrocarbon solvent used, but by keeping the pressure below 50 hPa, the hydrocarbon solvent used can be completely removed. Whether the hydrocarbon solvent used has been completely removed can be confirmed by checking the weight ratio of the total weight of the phosphite ester compound, the platinum compound, and the silane compound used to the weight of the platinum-phosphite ester complex-containing hydrosilylation catalyst obtained after completion of the step (d). If the weight of the resulting platinum-phosphite ester complex-containing hydrosilylation catalyst is greater than the combined weight of the phosphite ester compound, platinum compound, and silane compound used, some of the hydrocarbon solvent remains, so additional time must be added to this step to remove the hydrocarbon solvent completely.

### EXAMPLE

The present invention will be specifically described below with reference to Examples and Comparative Examples, but the present invention is not limited thereto. Note that in the Examples, "parts" means "parts by mass" and "%" means "% by mass".

### [Example 1]

0.6622 parts of tris(2,4-di-tert-butylphenyl)phosphite were weighed into a 25 g transparent glass vessel, 9.3378 parts of n-hexane were added, the vessel was sealed, and then the contents were left to dissolve at room temperature for approximately 1 hour. After visually confirming that the tris(2,4-di-tert-butylphenyl)phosphite crystals had dissolved, 10.0 parts of platinum-1,3-divinyl-1,1,3,3-tetramethyldisiloxane complex containing 1% of Pt atoms were added, the vessel was sealed, and then the contents were stirred for 30 minutes to make them uniform. Then, 0.06 parts of vinyltrimethoxysilane were added, the vessel was sealed, and then the contents were stirred for 60 minutes to make them uniform. The solution was then transferred to a 100 ml round-bottom flask, and n-hexane was removed through vacuum distillation using a rotary evaporator (conditions: 2 hours at 30°C / approximately 35 hPa). In the 100 ml round-bottom flask, 10.31 g of a colorless, transparent liquid was obtained (yield: 96.2%). This platinum-phosphite ester complex-containing hydrosilylation catalyst is designated "Catalyst 1".
(The amount of phosphite ester compound blended is 2.0 molecules per platinum molecule in the platinum compound, and the amount of silane compound blended is 0.79 molecules per platinum molecule in the platinum compound.)

### [Example 2]

0.3311 parts of tris(2,4-di-tert-butylphenyl)phosphite were weighed into a 25 g transparent glass vessel, 9.6689 parts of n-hexane were added, the vessel was sealed, and then the contents were left to dissolve at room temperature for approximately 1 hour. After visually confirming that the tris(2,4-di-tert-butylphenyl)phosphite crystals had dissolved, 10.0 parts of platinum-1,3-divinyl-1,1,3,3-tetramethyldisiloxane complex containing 1% of Pt atoms were added, the vessel was sealed, and then the contents were stirred for 30 minutes to make them uniform. Then, 0.06 parts of vinyltrimethoxysilane were added, the vessel was sealed, and then the contents were stirred for 60 minutes to make them uniform. The solution was then transferred to a 100 ml round-bottom flask, and n-hexane was removed through vacuum distillation using a rotary evaporator (conditions: 2 hours at 30°C / approximately 32 hPa). In the 100 ml round-bottom flask, 10.25 g of a colorless, transparent liquid was obtained (yield: 98.7%). This platinum-phosphite ester complex-containing hydrosilylation catalyst is designated "Catalyst 2".
(The amount of phosphite ester compound blended is 1.0 molecules per platinum molecule in the platinum compound, and the amount of silane compound blended is 0.79 molecules per platinum molecule in the platinum compound.)

### [Example 3]

0.3311 parts of tris(2,4-di-tert-butylphenyl)phosphite were weighed into a 25 g transparent glass vessel, 9.6689 parts of n-hexane were added, the vessel was sealed, and then the contents were left to dissolve at room temperature for approximately 1 hour. After visually confirming that the tris(2,4-di-tert-butylphenyl)phosphite crystals had dissolved, 10.0 parts of platinum-1,3-divinyl-1,1,3,3-tetramethyldisiloxane complex containing 1% of Pt atoms were added, the vessel was sealed, and then the contents were stirred for 30 minutes to make them uniform. Then, 1.00 parts of vinyltrimethoxysilane were added, the vessel was sealed, and then the contents were stirred for 60 minutes to make them uniform. The solution was then transferred to a 100 ml round-bottom flask, and n-hexane was removed through vacuum distillation using a rotary evaporator (conditions: 2 hours at 30°C / approximately 34 hPa). In the 100 ml round-bottom flask, 11.12 g of a colorless, transparent liquid was obtained (yield: 98.1%). This platinum-phosphite ester complex-containing hydrosilylation catalyst is designated "Catalyst 3".
(The amount of phosphite ester compound blended is 1.0 molecules per platinum molecule in the platinum compound, and the amount of silane compound blended is 13.16 molecules per platinum molecule in the platinum compound.)

### [Example 4]

0.6622 parts of tris(2,4-di-tert-butylphenyl)phosphite were weighed into a 25 g transparent glass vessel, 9.3378 parts of n-hexane were added, the vessel was sealed, and then the contents were left to dissolve at room temperature for approximately 1 hour. After visually confirming that the tris(2,4-di-tert-butylphenyl)phosphite crystals had dissolved, 10.0 parts of platinum-1,3-divinyl-1,1,3,3-tetramethyldisiloxane complex containing 1% of Pt atoms were added, the vessel was sealed, and then the contents were stirred for 30 minutes to make them uniform. Then, 0.06 parts of 7-octenyltrimethoxysilane (product name: KBM-1083 [manufactured by S hin-Etsu Chemical Co., Ltd.]) were added, the vessel was sealed, and then the contents were stirred for 60 minutes to make them uniform. The solution was then transferred to a 100 ml round-bottom flask, and n-hexane was removed through vacuum distillation using a rotary evaporator (conditions: 2 hours at 30°C / approximately 35 hPa). In the 100 ml round-bottom flask, 10.31 g of a colorless, transparent liquid was obtained (yield: 96.2%). This platinum-phosphite ester complex-containing hydrosilylation catalyst is designated "Catalyst 4".
(The amount of phosphite ester compound blended is 2.0 molecules per platinum molecule in the platinum compound, and the amount of silane compound blended is 0.50 molecules per platinum molecule in the platinum compound.)

### [Comparative Example 1]

The same procedure as in Example 1 was carried out, except that 0.06 parts of 2,4,6,8-tetravinyl-2,4,6,8-tetramethylcyclotetrasiloxane were used instead of vinyltrimethoxysilane. As a result, in the 100 ml round-bottom flask, 10.33 g of a colorless, transparent liquid was obtained (yield: 96.3%). This platinum-phosphite ester complex-containing hydrosilylation catalyst is designated "Catalyst 5".
(The amount of phosphite ester compound blended is 1.0 molecules per platinum molecule in the platinum compound, and the amount of silane compound blended is 0 molecules per platinum molecule in the platinum compound. [The amount of the ligand, 2,4,6,8-tetravinyl-2,4,6,8-tetramethylcyclotetrasiloxane, blended is 0.34 molecules per platinum molecule in the platinum compound.])

### [Comparative Example 2]

The same procedure as in Example 1 was carried out, except that vinyltrimethoxysilane was omitted. As a result, in the 100 ml round-bottom flask, 10.50g of a colorless, transparent liquid was obtained (yield: 98.5%). This platinum-phosphite ester complex-containing hydrosilylation catalyst is designated "Catalyst 6".
(The amount of phosphite ester compound blended is 1.0 molecules per platinum molecule in the platinum compound, and the amount of silane compound blended is 0 molecules per platinum molecule in the platinum compound.)

### [Comparative Example 3]

0.3311 parts of tris(2,4-di-tert-butylphenyl)phosphite were weighed into a 25 g transparent glass vessel, 9.6689 parts of n-heptane (boiling point: 98°C) were added, the vessel was sealed, and then the contents were left to dissolve at room temperature for approximately 1 hour. After visually confirming that the tris(2,4-di-tert-butylphenyl)phosphite crystals had dissolved, 10.0 parts of platinum-1,3-divinyl-1,1,3,3-tetramethyldisiloxane complex containing 1% of Pt atoms were added, the vessel was sealed, and then the contents were stirred for 30 minutes to make them uniform. Then, 0.06 parts of vinyltrimethoxysilane were added, the vessel was sealed, and then the contents were stirred for 60 minutes to make them uniform. The solution was then transferred to a 100 ml round-bottom flask, and n-hexane was removed through vacuum distillation using a rotary evaporator (conditions: 2 hours at 50°C / approximately 35 hPa). In the 100 ml round-bottom flask, a colorless, transparent liquid with white crystals dispersed therein (yield: 10.95 g) was obtained, but a colorless, transparent liquid could not be obtained. (Yield: 105.4%.). This platinum-phosphite ester complex-containing hydrosilylation catalyst is designated "Catalyst 7".
(The amount of phosphite ester compound blended is 1.0 molecules per platinum molecule in the platinum compound, and the amount of silane compound blended is 0.79 molecules per platinum molecule in the platinum compound.)

### [Comparative Example 4]

The same procedure as in Example 1 was carried out, but without using n-hexane. As a result, in the 100 ml round-bottom flask, a liquid with white crystals dispersed therein (yield: 10.33 g) was obtained, and a colorless, transparent liquid could not be obtained. (Yield: 99.9%.). This platinum-phosphite ester complex-containing hydrosilylation catalyst is designated "Catalyst 8".

The yields (g and %) of the platinum-phosphite ester complex-containing hydrosilylation catalysts obtained in Examples 1 to 4 and Comparative Examples 1 to 4 are shown in Table 1. Furthermore, the following tests were carried out on the appearance of the catalysts obtained in these Examples and Comparative Examples.

The obtained platinum-phosphite ester complex-containing hydrosilylation catalysts were stored in a sealed vessel filled with nitrogen. Their appearance was then checked after 7 days at 23°C, and those in which no crystals had formed were judged to be passes, and those in which crystals had formed were judged to be fails. The results are shown in Table 1.

**[Table 1]**

| | Example 1 | Example 2 | Example 3 | Example 4 | Comparative Example 1 | Comparative Example 2 | Comparative Example 3 | Comparative Example 4 |
|---|---|---|---|---|---|---|---|---|
| Yield (g) | 10.31 | 10.25 | 11.12 | 10.31 | 10.33 | 10.50 | 10.95 | 10.33 |
| Yield (%) | 96.2 | 98.7 | 98.1 | 96.2 | 96.3 | 98.5 | 105.4 | 99.9 |
| Appearance (After 7 days at 23°C) | Colorless , transpare nt liquid | Colorless , transpare nt liquid | Colorless , transpare nt liquid | Colorless , transpare nt liquid | Precipitation of crystals | Precipitation of crystals | Precipitation of crystals | Precipitation of crystals |
| Judgment | Pass | Pass | Pass | Pass | Fail | Fail | Fail | Fail |

### [Evaluation]

The platinum-phosphite ester complex-containing hydrosilylation catalysts obtained in Examples 1 to 4 satisfy the requirements of the present invention. In all of the Examples, the amount of phosphite ester compound blended is 1.0 or 2.0 molecules per platinum molecule in the platinum compound. However, when the same procedure was carried out by varying the amount of phosphite ester compound blended in increments of 0.1 molecules up to 3.0 molecules per platinum molecule of the platinum compound, it was confirmed that a colorless, transparent liquid was obtained in all cases. The platinum-phosphite ester complex-containing hydrosilylation catalysts obtained in Examples 1 to 4 showed suppressed crystal precipitation even after being left to stand for 7 days at 23°C under sealed conditions, demonstrating that platinum-phosphite ester complex-containing hydrosilylation catalysts with highly stable properties have been obtained.

In contrast, the platinum-phosphite ester complex-containing hydrosilylation catalysts of Comparative Examples 1 and 2 contain no silane compound represented by the general formula (2) and/or partial hydrolyzate thereof, and therefore, it was found that crystals precipitated in about 7 days at 23°C. Furthermore, the platinum-phosphite ester complex-containing hydrosilylation catalyst of Comparative Example 3 uses n-heptane, which has a boiling point of 80°C or more, as a hydrocarbon solvent for dissolving the phosphite ester compound. For this reason, even if the temperature of vacuum distillation is increased, the n-heptane used cannot be completely distilled off. In addition, as a result of increasing the heating temperature, the coordination of the phosphite ester compound in the platinum-phosphite ester complex-containing hydrosilylation catalyst was lost, causing crystals to precipitate, and it was found that a liquid platinum-phosphite ester complex-containing hydrosilylation catalyst could not be obtained. In the case of the platinum-phosphite ester complex-containing hydrosilylation catalyst of Comparative Example 4, the phosphite ester compound was coordinated to the platinum compound without being dissolved in a hydrocarbon solvent. As a result, it was found that the phosphite ester compound did not dissolve, and a liquid in which crystals were dispersed was obtained. The above results confirm the effectiveness of the catalyst manufacturing method of the present invention for obtaining a stable liquid platinum-phosphite ester complex-containing hydrosilylation catalyst.

### [Examples of Curable Organopolysiloxane Compositions Utilizing Platinum-Phosphite Ester Complex-Containing Hydrosilylation Catalysts]

Examples and Comparative Examples relating to the curable organopolysiloxane composition utilizing a platinum-phosphite ester complex-containing hydrosilylation catalyst obtained according to the present invention are described in detail below. The following are Examples and Comparative Examples of one-component millable silicone rubber compositions, but the present invention is not limited to these.

The evaluation of these examples was carried out as shown below.

### [Regarding the Workability of Making One-Component Millable Silicone Rubber Compositions]

When preparing the one-component millable silicone rubber compositions prepared in the following Examples and Comparative Examples, those in which the platinum-phosphite ester complex-containing hydrosilylation catalyst was a liquid and no problems occurred when it was added were judged to be passes. Conversely, if the platinum-phosphite ester complex-containing hydrosilylation catalyst crystallized during the catalyst blending step, causing problems with workability when it was added, it was judged to be a fail.

### [Storage Stability of One-Component Millable Silicone Rubber Compositions]

The storage stability of the one-component millable silicone rubber compositions prepared in the following Examples and Comparative Examples was evaluated by comparing the initial curing properties of the obtained one-component millable silicone rubber compositions with their curing properties after storage for 6 months at 23°C, using a rheometer (Rubber Process Analyzer RPA2000 manufactured by Alpha Technologies Inc.). When this was done, products that could be evaluated after 6 months at 23°C were judged to be passes. Here, the curing data for the one-component millable silicone rubber compositions are shown as measurements taken at 150°C.

In Table 2, T50* and T50** are calculated assuming that 100% curing occurs when the torque stabilizes on the time-torque curve at 150°C, and T50 indicates the time T from when the torque develops to when it reaches 50%.

### [Composition Example 1]

100 parts by mass of organopolysiloxane raw rubber having an average degree of polymerization of 6,000 and consisting of 99.85 mol% dimethylsiloxane units, 0.125 mol% of methylvinylsiloxane units, and 0.025 mol% of dimethylvinylsiloxy units, 55 parts by mass of fumed silica (A EROSIL 200 manufactured by Ni ppon Aerosil Co., Ltd.) having a BET method specific surface area of 200 m²/g, 12 parts by mass of dimethyldimethoxysilane, 0.2 parts by mass of vinyltrimethoxysilane, 12 parts by mass of dimethylpolysiloxane having silanol groups at both ends, an average degree of polymerization of 4, and a viscosity at 25°C of 15 mPa·s, and 0.15 parts by mass of 3% potassium siliconate were added together, and the mixture was heated 170°C for 2 hours while being mixed with a kneader, to prepare base compound (1).

1.7 parts by mass of organohydrogensiloxane having a set structure of M₂D^{H}₂₀D₁₈ (H amount: 0.00726 mol/g) (here, M represents (CH₃)₃SiO_{1/2}-, D^{H} represents (CH₃)HSiO_{2/2}-, and D represents (CH₃)₂SiO_{2/2}-) and 0.05 parts by mass of "Catalyst 1" prepared in Example 1 were added per 100 parts by mass of organopolysiloxane raw rubber to the base compound (1) and mixed uniformly using a two-roll mill to produce raw rubber-like one-component silicone rubber composition 1.

### [Composition Example 2]

One-component silicone rubber composition 2 was manufactured in the same manner as in Composition Example 1, except that 0.05 parts by mass of "Catalyst 2" were used instead of "Catalyst 1".

### [Composition Example 3]

One-component silicone rubber composition 3 was manufactured in the same manner as in Composition Example 1, except that 0.05 parts by mass of "Catalyst 3" were used instead of "Catalyst 1".

### [Composition Example 4]

One-component silicone rubber composition 4 was manufactured in the same manner as in Composition Example 1, except that 0.05 parts by mass of "Catalyst 4" were used instead of "Catalyst 1".

### [Composition Comparative Example 1]

One-component silicone rubber composition 5 was manufactured in the same manner as in Composition Example 1, except that 0.05 parts by mass of "Catalyst 5" were used instead of "Catalyst 1".

### [Composition Comparative Example 2]

One-component silicone rubber composition 6 was manufactured in the same manner as in Composition Example 1, except that 0.05 parts by mass of "Catalyst 6" were used instead of "Catalyst 1".

### [Composition Comparative Example 3]

One-component silicone rubber composition 7 was manufactured in the same manner as in Composition Example 1, except that 0.05 parts by mass of "Catalyst 7" were used instead of "Catalyst 1".

### [Composition Comparative Example 4]

One-component silicone rubber composition 8 was manufactured in the same manner as in Composition Example 1, except that 0.05 parts by mass of "Catalyst 8" were used instead of "Catalyst 1".

### [Composition Comparative Example 5]

One-component silicone rubber composition 9 was manufactured in the same manner as in Composition Example 1, except that 0.05 parts by mass of platinum-1,3-divinyl-1,1,3,3-tetramethyldisiloxane complex having 1% of Pt atoms were used instead of "Catalyst 1".

### [Test]

The results obtained in the above Composition Examples 1 to 4 and Composition Comparative Examples 1 to 5 are shown in Table 2.

**[Table 2]**

| | Composition Example 1 | Composition Example 2 | Composition Example 3 | Composition Example 4 | Composition Comparative Example 1 | Composition Comparative Example 2 | Composition Comparative Example 3 | Composition Comparative Example 4 | Composition Comparative Example 5 |
|---|---|---|---|---|---|---|---|---|---|
| Catalyst pass/fail judgment | Pass | Pass | Pass | Pass | Fail | Fail | Fail | Fail | - |
| Workabilit y when adding catalyst | Pass | Pass | Pass | Pass | Fail | Fail | Fail | Fail | Pass |
| Initial T50* (min) | 0.75 | 0.45 | 0.43 | 0.77 | 0.74 | 0.75 | 0.76 | 0.36 | 0.33 |
| T50** after storing for 6 months at 23°C (min) | 0.72 | 0.39 | 0.36 | 0.75 | 0.69 | 0.66 | 0.68 | Measurem ent impossib le | Measurem ent impossib le |
| T50** - T50* | -0.03 | -0.06 | -0.07 | -0.02 | -0.05 | -0.09 | -0.08 | Calculat ion impossib le | Calculat ion impossib le |
| Compositio n pass/fail judgment | Pass | Pass | Pass | Pass | Pass | Pass | Pass | Fail | Fail |

### [Composition Evaluation]

The platinum-phosphite ester complex-containing hydrosilylation catalysts obtained in Examples 1 to 4 satisfy the requirements of the present invention, and it can be seen that the curable organopolysiloxane compositions in Composition Examples 1 to 4 that use these catalysts also have good storage stability at 23°C.

In contrast, the platinum-phosphite ester complex-containing hydrosilylation catalysts of Comparative Examples 1 to 4 precipitated crystals at 23°C, so the catalyst itself was not a pass. Furthermore, because it was necessary when adding the catalyst to add the required amount of the catalyst while removing the crystalline components, the workability was also not a pass. However, curable organopolysiloxane compositions using these catalysts show good storage stability. Therefore, if the catalyst is liquid at 23°C, workability when adding the catalyst will also improve. Furthermore, with the platinum-phosphite ester complex-containing hydrosilylation catalyst of Comparative Example 4, the desired platinum-phosphite ester complex-containing hydrosilylation catalyst was obtained without using a hydrocarbon solvent. As a result, the complex formation between the phosphite ester compound and platinum was poor, and the storage stability of the curable silicone composition made using it was reduced. Comparative Example 5 is an example of a curable organopolysiloxane composition in which a platinum compound, containing no organic solvent, selected from the group consisting of complexes between a platinum chloride, a chloroplatinic acid or a chloroplatinic acid salt and vinyl group-containing siloxane, is used directly without forming a complex between platinum and a phosphite ester or without association with a siloxane compound. The storage stability of the curable organopolysiloxane composition prepared using this catalyst was reduced. The above results demonstrate that curable organopolysiloxane compositions that use the platinum-phosphite ester complex-containing hydrosilylation catalyst obtained in the present invention exhibit extremely outstanding performance in terms of improved workability and storage stability.

The present description includes the following embodiments.
[1] : A platinum-phosphite ester complex-containing hydrosilylation catalyst comprising:
   (A) a platinum-phosphite ester complex consisting of platinum and a phosphite ester compound represented by the following general formula (1), 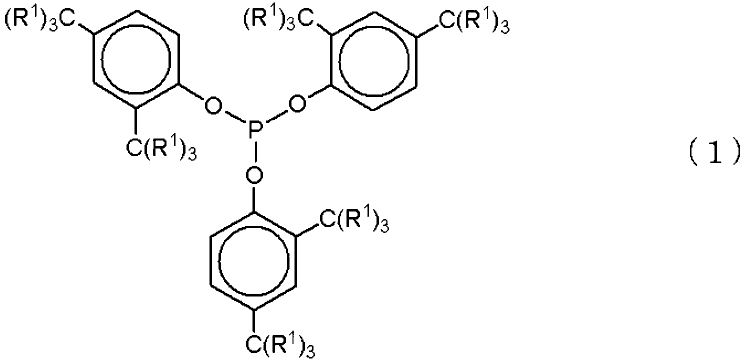 wherein R¹ is a hydrogen atom or a monovalent aliphatic hydrocarbon group having 1 to 3 carbon atoms; and
   (B) a silane compound represented by the following general formula (2) and/or a partial hydrolyzate thereof, 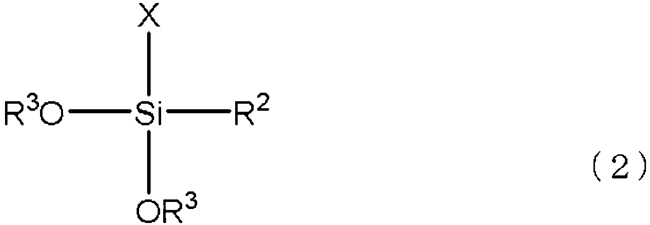 wherein R² represents an alkenyl group having 2 to 10 carbon atoms, and R³ represents a monovalent aliphatic hydrocarbon group having 1 to 3 carbon atoms; in addition, X represents a monovalent aliphatic hydrocarbon group having 1 to 3 carbon atoms or OR³; and
      the hydrosilylation catalyst is an association of the components (A) and (B), contains no organic solvent, and is a liquid at 23°C.
[2] : The platinum-phosphite ester complex-containing hydrosilylation catalyst according to [1], wherein the component (B) is an alkoxysilane derivative wherein the R² is a vinyl group.
[3] : A curable organopolysiloxane composition comprising the platinum-phosphite ester complex-containing hydrosilylation catalyst according to [1] or [2].
[4] : The curable organopolysiloxane composition according to [3], containing no organic solvent.
[5] : An article having a cured material of the curable organopolysiloxane composition according to [3] or [4].
[6] : A method for manufacturing a platinum-phosphite ester complex-containing hydrosilylation catalyst, comprising the following steps (a) to (d):
   (a) a step of preparing a solution wherein a phosphite ester compound represented by the following general formula (1) is dissolved in a hydrocarbon solvent having a boiling point of 80°C or less, 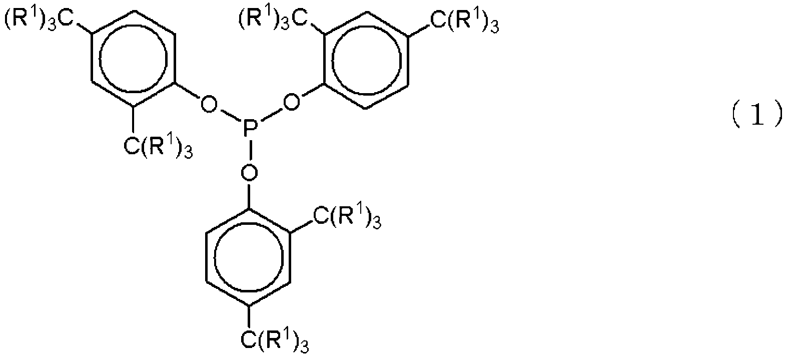 wherein R¹ is a hydrogen atom or a monovalent aliphatic hydrocarbon group having 1 to 3 carbon atoms;
   (b) a step of adding to the solution a platinum compound, containing no organic solvent, which is the complex made of a vinyl group-containing siloxane with the group consisting of a platinum chloride, a chloroplatinic acid or a chloroplatinic acid, and then dispersing it to prepare a solution containing a platinum-phosphite ester complex;
   (c) a step of adding to the solution obtained in the above steps (a) to (b) a silane compound represented by the following general formula (2) and/or a partial hydrolyzate thereof, and then dispersing it to prepare a solution containing an association of at least a part of the platinum-phosphite ester complex and the silane compound represented by the following general formula (2) and/or a partial hydrolyzate thereof, 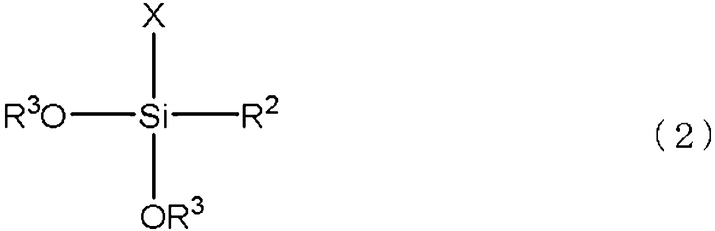 wherein R² represents an alkenyl group having 2 to 10 carbon atoms, and R³ represents a monovalent aliphatic hydrocarbon group having 1 to 3 carbon atoms; in addition, X represents a monovalent aliphatic hydrocarbon group having 1 to 3 carbon atoms or OR³; and
   (d) a step of removing the hydrocarbon solvent from the solution obtained in the step (c).
[7] : The method for manufacturing a platinum-phosphite ester complex-containing hydrosilylation catalyst according to [6], wherein in the step (c), the silane compound and/or the partial hydrolyzate thereof is added in such a way that the number of moles of alkenyl groups in the silane compound and/or the partial hydrolyzate thereof falls within the range of 0.01 to 500 times that of one platinum atom in the platinum compound.

It should be noted that the present invention is not limited to the embodiments described above. The embodiments are just examples, and any examples that have substantially the same features and demonstrate the same functions and effects as those in the technical concepts disclosed in the claims of the present invention are included in the technical scope of the present invention.

### [Industrial Applicability]

The platinum-phosphite ester complex-containing hydrosilylation catalyst of the present invention can maintain its liquid properties at 23°C without using an organic solvent, whereas conventional platinum-phosphite ester complex-containing hydrosilylation catalysts tend to form crystals. This improves the stability of the properties of the hydrosilylation catalyst itself, improves the workability when producing a curable organopolysiloxane composition using this catalyst, and makes it possible to obtain a highly safe curable organopolysiloxane composition that contains no hydrocarbon organic solvent. Therefore, this is a platinum-phosphite ester complex-containing hydrosilylation catalyst that has very little adverse effect on the human body. Furthermore, the resulting curable organopolysiloxane composition containing no hydrocarbon organic solvent is an organopolysiloxane composition that retains stable physical and other properties even when exposed to temperatures above room temperature for long periods of time, and can therefore be expected to find wide-ranging applications in fields such as electrical equipment, automobiles, construction, medicine, and food.

## Claims

1. A platinum-phosphite ester complex-containing hydrosilylation catalyst comprising:
(A) a platinum-phosphite ester complex consisting of platinum and a phosphite ester compound represented by the following general formula (1), 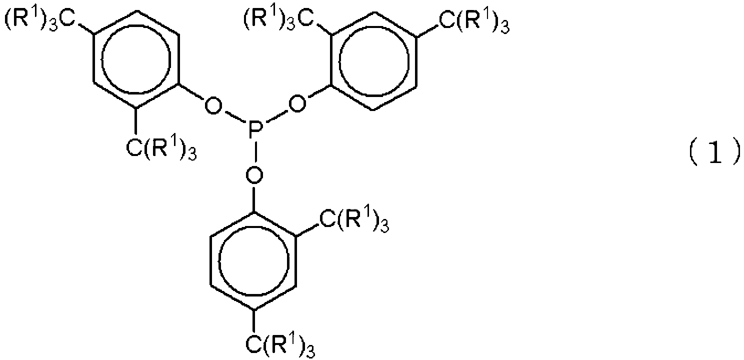 wherein R¹ is a hydrogen atom or a monovalent aliphatic hydrocarbon group having 1 to 3 carbon atoms; and
(B) a silane compound represented by the following general formula (2) and/or a partial hydrolyzate thereof, 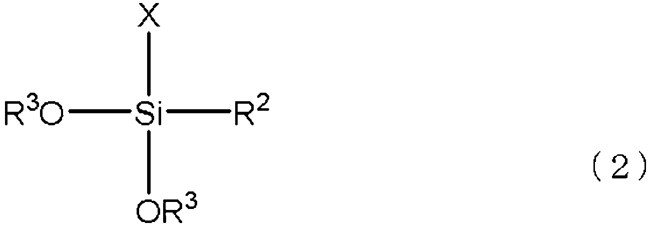 wherein R² represents an alkenyl group having 2 to 10 carbon atoms, and R³ represents a monovalent aliphatic hydrocarbon group having 1 to 3 carbon atoms; in addition, X represents a monovalent aliphatic hydrocarbon group having 1 to 3 carbon atoms or OR³; and
the hydrosilylation catalyst is an association of the components (A) and (B), contains no organic solvent, and is a liquid at 23°C.

2. The platinum-phosphite ester complex-containing hydrosilylation catalyst according to claim 1, wherein the component (B) is an alkoxysilane derivative wherein the R² is a vinyl group.

3. A curable organopolysiloxane composition comprising the platinum-phosphite ester complex-containing hydrosilylation catalyst according to claim 1 or claim 2.

4. The curable organopolysiloxane composition according to claim 3, containing no organic solvent.

5. An article having a cured material of the curable organopolysiloxane composition according to claim 3.

6. A method for manufacturing a platinum-phosphite ester complex-containing hydrosilylation catalyst, comprising the following steps (a) to (d):
(a) a step of preparing a solution wherein a phosphite ester compound represented by the following general formula (1) is dissolved in a hydrocarbon solvent having a boiling point of 80°C or less, 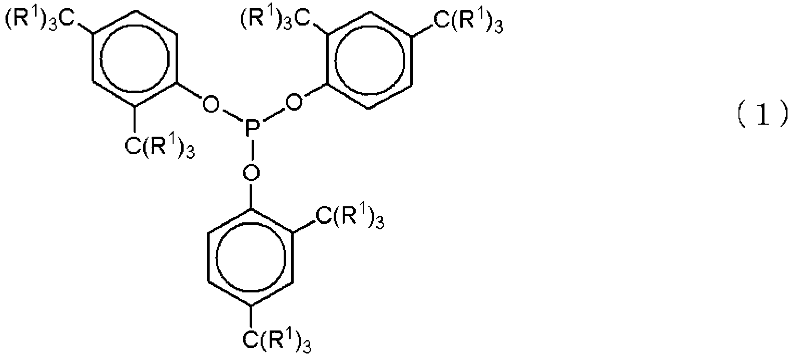 wherein R¹ is a hydrogen atom or a monovalent aliphatic hydrocarbon group having 1 to 3 carbon atoms;
(b) a step of adding to the solution a platinum compound, containing no organic solvent, selected from the group consisting of complexes between a platinum chloride, a chloroplatinic acid or a chloroplatinic acid salt and vinyl group-containing siloxane, and then dispersing it to prepare a solution containing a platinum-phosphite ester complex;
(c) a step of adding to the solution obtained in the above steps (a) to (b) a silane compound represented by the following general formula (2) and/or a partial hydrolyzate thereof, and then dispersing it to prepare a solution containing an association of at least a part of the platinum-phosphite ester complex and the silane compound represented by the following general formula (2) and/or a partial hydrolyzate thereof, 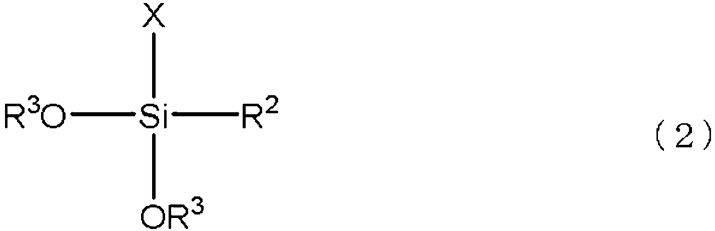 wherein R² represents an alkenyl group having 2 to 10 carbon atoms, and R³ represents a monovalent aliphatic hydrocarbon group having 1 to 3 carbon atoms; in addition, X represents a monovalent aliphatic hydrocarbon group having 1 to 3 carbon atoms or OR³; and
(d) a step of removing the hydrocarbon solvent from the solution obtained in the step (c).

7. The method for manufacturing a platinum-phosphite ester complex-containing hydrosilylation catalyst according to claim 6, wherein in the step (c), the silane compound and/or the partial hydrolyzate thereof is added in such a way that the number of moles of alkenyl groups in the silane compound and/or the partial hydrolyzate thereof falls within the range of 0.01 to 500 times that of one platinum atom in the platinum compound.
